# NEUE EUROPÄISCHE PATENTSCHRIFT

(11) **EP 2 923 955 B2**
(45) Veröffentlichungstag und Bekanntmachung des Hinweises auf die Entscheidung über den Einspruch: **30.11.2022**
(45) Hinweis auf die Patenterteilung: 19.10.2016
(21) Anmeldenummer: 15161101.9
(22) Anmeldetag: 26.03.2015
(51) Int. Cl.: B65B 35/24, B65B 9/04, B29C 51/26, B65G 35/00, B65G 47/26, B65B 59/00

(54) **VORRICHTUNG ZUR VERARBEITUNG VON LEBENSMITTELPRODUKTEN**
DEVICE FOR PROCESSING FOOD PRODUCTS
DISPOSITIF DE TRAITEMENT DE PRODUITS ALIMENTAIRES

(30) Priorität: 28.03.2014 DE 102014104387
(43) Veröffentlichungstag der Anmeldung: 30.09.2015
(73) Patentinhaber: Textor Maschinenbau GmbH, 87787 Wolfertschwenden (DE)
(72) Erfinder: Schmeiser, Jörg, 87487 Wiggensbach (DE)
(74) Vertreter: Manitz Finsterwald Patent- und Rechtsanwaltspartnerschaft mbB

(56) Entgegenhaltungen:
- EP-A1- 1 854 596
- EP-A1- 2 522 474
- CH-A5- 683 176
- DE-A1- 10 238 482
- US-A- 4 034 536
- US-A1- 2012 159 900

## Beschreibung

Die vorliegende Erfindung betrifft eine Vorrichtung zur Verarbeitung von Lebensmittelprodukten gemäß Anspruch 1.

Bei der industriellen Verarbeitung von Lebensmittelprodukten, wie beispielsweise Fleisch-, Wurst- oder Käseprodukten, kommen häufig sogenannte Produktionslinien zum Einsatz, welche neben einer Schneidvorrichtung wie einem Hochleistungsslicer mehrere aneinander gereihte Fördereinrichtungen wie Portionierförderer, Aufreihförderer, Spreizförderer, Verteilerförderer, Pufferförderer und Einlegeförderer umfassen. Am Ende einer solchen Produktionslinie befindet sich üblicherweise eine Verpackungsmaschine, welche aus einer bereitgestellten Kunststofffolienbahn mittels eines Tiefziehprozesses eine Anordnung von Verpackungen zur Verfügung stellt, in welche die Produkte oder Produktportionen mittels eines Einlegeförderers in der Regel formatsatzweise eingelegt werden. Eine solche Verpackungsmaschine mit Tiefzieh-Einheit wird auf dem Fachgebiet auch als "Tiefzieher" bezeichnet. Ebenso wird der Einlegeförderer häufig verkürzt als "Einleger" bezeichnet. Um ein zuverlässiges Einlegen zu ermöglichen, muss der Einleger oberhalb des Tiefziehers positioniert sein, was bei seitlich auskragender Anordnung der Fördereinheit problemlos möglich ist.

In der DE 102 38 482 A1 ist eine Vorrichtung zum Einlegen von Gütern in eine Verpackungsmaschine oder dergleichen offenbart. Die Vorrichtung weist eine Fördervorrichtung für die Güter auf. Zumindest ein Teil der Fördervorrichtung ist um eine Schwenkachse schwenkbar.

Unter einer "Vorrichtung zur Verarbeitung von Lebensmittelprodukten" im Sinne der Erfindung soll allgemein eine beliebige Einrichtung zu verstehen sein, welche einer Verarbeitung, Bearbeitung und/oder Handhabung von einzelnen oder portionierten Lebensmittelprodukten dient. Ferner versteht sich, dass eine Anordnung aus einem Produktförderer mit seitlich auskragender Fördereinheit und einer zumindest teilweise unter der Fördereinheit angeordneten Arbeitseinheit in vielfältiger Weise im Umfeld der Lebensmittelbe- und -verarbeitung eingesetzt werden kann, also nicht nur in Form einer Kombination aus Einleger und Tiefzieher.

In den meisten praktischen Fällen müssen die Fördereinheiten eines Einlegers für eine formatsatzweise Förderung tauglich sein und daher eine Arbeitsbreite von 40 cm bis 80 cm aufweisen, also relativ stark seitlich auskragen. Die Konstruktion muss ferner ausreichend starr sein, da im Betrieb Schwingungen, die eine ordnungsgemäße Ausrichtung der Produkte oder Portionen beeinträchtigen könnten, nicht akzeptierbar sind. Gleichzeitig muss eine gute Zugänglichkeit aller Maschinenbereiche für Reinigungs- und Wartungsarbeiten gewährleistet sein. Insbesondere das relativ große Tiefziehwerkzeug muss nach oben und zur Seite hin ein - und ausgebaut werden können. Aufgrund der konstruktionsbedingten Kopflastigkeit müssen die Rahmen außerdem im Allgemeinen eine hohe Standfestigkeit aufweisen, weshalb sie dementsprechend schwer sind - häufig bis zu mehreren Tonnen.

Auf dem Fachgebiet sucht man daher fortlaufend nach Möglichkeiten, Lebensmittelverarbeitungsvorrichtungen kompakter und leichter zu bauen.

Die Lösung dieser Aufgabe erfolgt durch eine Vorrichtung mit den Merkmalen des Anspruchs 1.

Erfindungsgemäß ist der Rahmen des Produktförderers über eine mechanische Verbindung an der Arbeitseinheit abgestützt oder gehalten. Insbesondere ist der Rahmen außerdem an der Arbeitseinheit fixiert. In mechanischer Hinsicht wird also der Produktförderer in die Arbeitseinheit integriert. Somit können die Masse und die Steifigkeit bzw. Stabilität der Arbeitseinheit dazu genutzt werden, dem Rahmen des Produktförderers zusätzliche Standfestigkeit zu verleihen. Im Ergebnis ermöglicht dies eine leichtere und kompaktere Bauweise für den Produktförderer. Die Erfindung beruht unter anderem auf der Erkenntnis, dass es in vielen Anwendungssituationen der vorstehend genannten Art nicht erforderlich ist, die Arbeitseinheit und den Produktförderer als eigenständige standfeste Maschinen auszulegen, da sie ohnehin stets gemeinsam verwendet werden. Demgegenüber ist man auf dem Fachgebiet bislang dem Gedanken verhaftet, beispielsweise für Tiefzieher und Einleger völlig separate Konstruktionen vorzusehen.

Insgesamt liegt der Erfindung also der allgemeine Gedanke zugrunde, eine unter einem Produktförderer mit seitlich auskragender Fördereinheit anzuordnende Arbeitseinheit dazu zu nutzen, den Produktförderer selbst kompakter und leichter zu bauen. Erfindungsgemäß kann die Masse, Steifigkeit oder Stabilität und/oder der umbaute Raum der Arbeitseinheit dazu genutzt werden, die Abstützung des Produktförderers zu verbessern. Hierfür ist es erforderlich, bereits bei der Konstruktion eines Produktförderers die später unter dessen Fördereinheit anzuordnende Arbeitseinheit zu berücksichtigen.

Je nach Bedarf kann der Rahmen des Produktförderers in horizontaler und/oder in vertikaler Richtung an der Arbeitseinheit abgestützt sein. Eine Abstützung in horizontaler und in vertikaler Richtung ermöglicht eine besonders hohe Stabilität der Gesamtvorrichtung. Insbesondere ist der Rahmen mit zumindest einem horizontalen Rahmenbereich und/oder mit wenigstens einem vertikalen Rahmenbereich an der Arbeitseinheit abgestützt.

Eine spezielle Ausführungsform der Erfindung sieht vor, dass der Produktförderer vollständig durch die Arbeitseinheit getragen ist. Dies bedeutet eine Abkehr von dem gängigen Prinzip, Produktförderer stets als eigenständige Vorrichtungen zu konstruieren. Letztlich wird bei der genannten Ausgestaltung also eine Arbeitseinheit mit integriertem Produktförderer, also beispielsweise ein Tiefzieher mit einem integrierten Einleger, bereitgestellt.

Der Rahmen des Produktförderers kann in Beabstandung von einer Standfläche und/oder vom Boden an der Arbeitseinheit befestigt sein. Das heißt der Produktförderer kann ausschließlich über die Arbeitseinheit auf der Standfläche bzw. am Boden abgestützt sein. Der Verzicht auf eigene Standfüße für den Produktförderer ermöglicht eine beträchtliche Einsparung von Gewicht und Bauraum. Außerdem stellt sich eine Lebensmittelverarbeitungsmaschine mit wenigen Standfüßen als besonders reinigungsfreundlich dar.

Alternativ kann der Rahmen des Produktförderers sowohl an einer Standfläche und/oder am Boden als auch an der Arbeitseinheit abgestützt sein. Dies ermöglicht eine besonders stabile Gesamtkonstruktion.

Eine bevorzugte Ausgestaltung der Erfindung sieht vor, dass der Rahmen des Produktförderers allein nicht für ein standfestes Tragen der Fördereinheit ausreicht, d.h. dass der Rahmen nur zusammen mit der Arbeitseinheit eine ausreichende Steifigkeit und Standfestigkeit zum Tragen und Betreiben der Fördereinheit bereitstellt. Mit anderen Worten ist der Produktförderer lediglich mit einem leichten Rahmen ausgestattet, um Gewicht, Kosten und Bauraum zu sparen. Die gewünschte Standsicherheit ergibt sich erst durch die Abstützung an der Arbeitseinheit und Ausnutzung von deren Masse und Steifigkeit bzw. Stabilität.

Eine weitere Ausführungsform der Erfindung sieht vor, dass der Rahmen des Produktförderers an einem, insbesondere seitlichen, Halterahmen der Arbeitseinheit fixiert ist. Beispielsweise kann der Rahmen des Produktförderers an einem Rahmen der Arbeitseinheit eingehängt oder angeschraubt sein. Viele Arbeitseinheiten weisen von außen zugängliche Rahmenelemente wie Profilträger auf, die für eine Anbringung des Rahmens des Produktförderers genutzt werden können.

Es kann vorgesehen sein, dass die Fördereinheit des Produktförderers in Bezug auf dessen Rahmen zwischen einer abgesenkten Betriebsstellung und einer angehobenen Wartungsstellung bewegbar ist. Wenn sich die Fördereinheit in der angehobenen Wartungsstellung befindet, ist ein leichter und sicherer Zugang zu der darunter befindlichen Arbeitseinheit gewährleistet, beispielsweise zum Auswechseln eines Tiefziehwerkzeugs. Es ist hierbei nicht erforderlich, den Produktförderer als Ganzes beiseite zu schaffen oder aufwändige Montagearbeiten durchzuführen.

Die Fördereinheit des Produktförderers kann von der Arbeitseinheit, insbesondere durch Verschwenken oder Wegklappen, weg bewegbar sein.

Zwischen der Fördereinheit des Produktförderers und dem Rahmen kann eine Gelenkverbindung vorgesehen sein, die bei stationärem Rahmen ein Verschwenken oder Wegklappen der Fördereinheit relativ zum Rahmen erlaubt, insbesondere um eine parallel zur Förderrichtung verlaufenden Schwenkachse.

Eine weitere Ausgestaltung der Erfindung sieht vor, dass eine Funktionseinheit der Arbeitseinheit gemeinsam mit der Fördereinheit bewegbar ist, wobei, bevorzugt, die Funktionseinheit an einer Unterseite, im unteren Bereich und/der unterhalb der Fördereinheit befestigt ist. Bei der Funktionseinheit kann es sich beispielsweise um eine Schutzabdeckung der Arbeitseinheit handeln, welche im Wartungsfall zu entfernen ist. Dadurch dass eine solche Schutzabdeckung gemeinsam mit der Fördereinheit zum Beispiel zwischen einer Betriebsstellung und einer Wartungsstellung bewegbar ist, entfällt für einen Benutzer das separate Entfernen der Schutzabdeckung. Zudem kann hierdurch in allen Betriebsstellungen dauerhaft gewährleistet werden, dass Produktreste oder Reinigungsmitteltropfen nicht nach unten in den Bereich der Arbeitseinheit gelangen. Die Handhabung der Vorrichtung kann somit vereinfacht und deren Sauberkeit weiter verbessert werden.

Vorzugsweise stellt die Funktionseinheit in einer Betriebsstellung eine Betriebsfunktion der Arbeitseinheit und gleichzeitig eine Betriebsfunktion der Fördereinheit bereit. Beispielsweise kann die Funktionseinheit eine Schutzabdeckung für einen Tiefzieher und gleichzeitig eine Auffangvorrichtung zum Abweisen oder Auffangen von Partikeln bilden, welche von der darüber befindlichen Fördereinheit herabfallen. Demgegenüber ist es bei einer separaten Konstruktion von Tiefzieher und Einleger im Allgemeinen erforderlich, sowohl den Tiefzieher mit einer Schutzabdeckung als auch den Einleger im Bereich unterhalb der Fördereinheit mit einem Auffangblech oder dergleichen zu versehen.

Wie erwähnt umfasst die Arbeitseinheit eine Einrichtung oder Teile einer Einrichtung zum automatischen Verpacken der geförderten Produkte, beispielsweise einen sogenannten Tiefzieher. Grundsätzlich kann die Arbeitseinheit jedoch weitere Einrichtungen zum Be- und Verarbeiten der geförderten Lebensmittelprodukte aufweisen. Der Produktförderer ist zum Einlegen der geförderten Produkte in jeweilige, durch die Einrichtung zum automatischen Verpacken bereitgestellte Verpackungseinheiten ausgebildet. Eine derart gestaltete Vorrichtung bildet also eine Einheit aus einer Verpackungsmaschine und einem dazugehörigen Einlegeförderer. Derartige Einheiten werden im Umfeld der Lebensmittelverarbeitung häufig benötigt und brauchen erfindungsgemäß aufgrund des modularen Aufbaus aus Produktförderer einerseits und Arbeitseinheit andererseits erst vor Ort direkt am Aufstellort erstellt zu werden. Zusätzlich kann der Produktförderer zum Gruppieren von Produkten oder mehrere Einzelprodukte umfassenden Portionen, zum Bilden von Zeilen aus Produkten oder mehrere Einzelprodukte umfassenden Portionen, und/oder zum Bilden von Formatsätzen aus Produkten oder mehrere Einzelprodukte umfassenden Portionen ausgebildet sein.

Gemäß einem Ausführungsbeispiel ist vorgesehen, dass Positionierungsmittel vorgesehen sind, mittels welcher die Position des Rahmens, insbesondere von horizontalen und/oder vertikalen Rahmenbereichen, relativ zu der Arbeitseinheit, insbesondere bei an der Arbeitseinheit abgestütztem oder gehaltenem Rahmen einstellbar und in einem jeweils eingestellten Zustand gehalten ist, wobei insbesondere die Positionierungsmittel in ihrer einen Abstand zwischen dem Rahmen und der Arbeitseinheit festlegenden Länge veränderlich sind. Hierdurch kann auf denkbar einfache Weise vor Ort eine Adaption des Produktförderers an die Arbeitseinheit bzw. an die jeweils gegebene Abstütz- bzw. Haltesituation vorgenommen werden. Beispielsweise können Elemente oder Teile des Rahmens, beispielsweise horizontal oder vertikal verlaufende Rahmenteile des Produktförderers in der Länge veränderlich sein, um den Produktförderer an die Arbeitseinheit bzw. an deren Mittel zum Abstützen oder Halten bzw. zum Fixieren des Produktförderers anzupassen.

Des Weiteren kann vorgesehen sein, dass der Rahmen die Arbeitseinheit untergreift oder unterseitig umgreift, wobei insbesondere ein horizontal auskragender Rahmenbereich des Rahmens sich ausgehend von einer Seite der Arbeitseinheit unter dieser hindurch zur gegenüberliegenden Seite erstreckt und an dieser gegenüberliegenden Seite der Arbeitseinheit fixiert ist. Hierdurch kann eine besonders gleichmäßig verteilte Krafteinleitung in den Rahmen der Arbeitseinheit realisiert werden. Zudem können zusätzliche Standfüße für den Produktförderer entfallen, wodurch eine gute Reinigung des Bodens bzw. der Standfläche erleichtert wird.

Weiterbildungen der Erfindung sind auch in den abhängigen Ansprüchen, der Beschreibung sowie den beigefügten Zeichnungen angegeben.

Die Erfindung wird nachfolgend beispielhaft unter Bezugnahme auf die Zeichnungen beschrieben.
- Fig. 1: zeigt eine gemäß dem Stand der Technik gestaltete Anordnung aus einem Produktförderer und einer Arbeitseinheit, wobei sich eine Fördereinheit des Produktförderers in einer abgesenkten Betriebsstellung befindet.
- Fig. 2: zeigt die Anordnung gemäß Fig. 1, wobei sich die Fördereinheit in einer angehobenen Wartungsstellung befindet.
- Fig. 3: zeigt eine Vorrichtung zur Verarbeitung von Lebensmittelprodukten gemäß einer ersten Ausführungsform der Erfindung, wobei sich eine Fördereinheit eines Produktförderers der Vorrichtung in einer abgesenkten Betriebsstellung befindet.
- Fig. 4: zeigt die Vorrichtung gemäß Fig. 3, wobei sich die Fördereinheit in einer angehobenen Wartungsstellung befindet.
- Fig. 5: zeigt die Vorrichtung gemäß Fig. 4, wobei eine Funktionseinheit einer Arbeitseinheit der Vorrichtung gemeinsam mit der Fördereinheit in die angehobene Wartungsstellung bewegt ist.
- Fig. 6: zeigt eine nicht zur Erfindung gehörende Vorrichtung zur Verarbeitung von Lebensmittelprodukten, wobei sich eine Fördereinheit eines Produktförderers der Vorrichtung in einer abgesenkten Betriebsstellung befindet.
- Fig. 7: zeigt die Vorrichtung gemäß Fig. 6, wobei sich die Fördereinheit in einer angehobenen Wartungsstellung befindet.
- Fig. 8: zeigt die Vorrichtung gemäß Fig. 7, wobei eine Funktionseinheit einer Arbeitseinheit der Vorrichtung gemeinsam mit der Fördereinheit in die angehobene Wartungsstellung bewegt ist.
- Fig. 9: zeigt eine Vorrichtung zur Verarbeitung von Lebensmittelprodukten gemäß einer zweiten Ausführungsform der Erfindung, wobei sich eine Fördereinheit eines Produktförderers der Vorrichtung in einer abgesenkten Betriebsstellung befindet.
- Fig. 10: zeigt die Vorrichtung gemäß Fig. 9, wobei sich die Fördereinheit in einer angehobenen Wartungsstellung befindet.

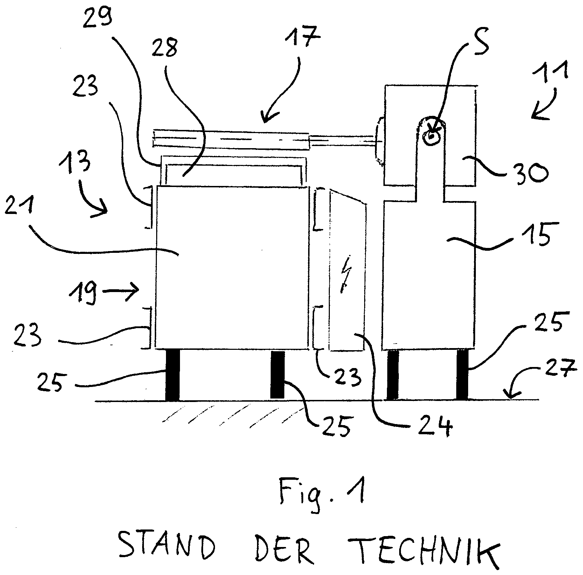

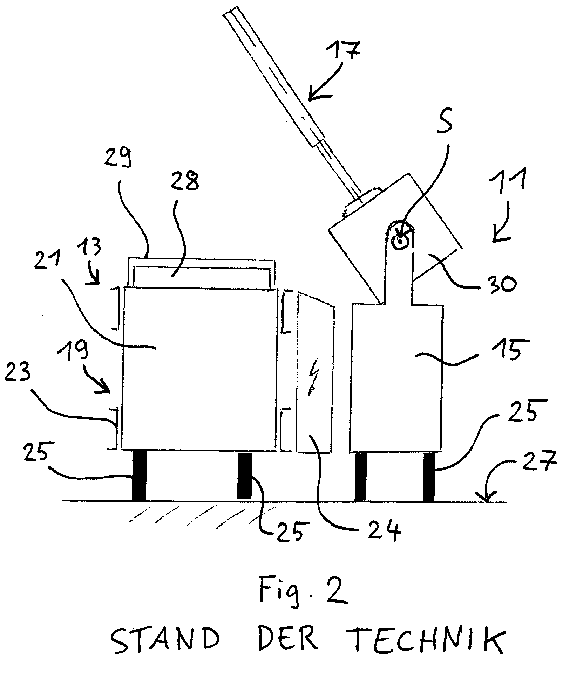

Die in Fig. 1 und 2 gezeigte, gemäß dem Stand der Technik gestaltete Vorrichtung zur Verarbeitung von Lebensmittelprodukten umfasst einen Produktförderer 11 und eine Arbeitseinheit 13 in Form einer automatischen Verpackungsmaschine.

Der Produktförderer 11 umfasst ein Grundgestell oder einen Rahmen 15 und eine am Rahmen 15 fixierte Fördereinheit 17. Die Fördereinheit 17 umfasst einen oder mehrere Band- oder Riemenförderer und ist wie dargestellt seitlich auskragend an dem Rahmen 15 angeordnet. Die Arbeitseinheit 13 befindet sich unterhalb der Fördereinheit 17 und umfasst ebenfalls ein Grundgestell oder einen Rahmen 19, welcher hier aus Querträgern 21 mit daran angebrachten, profilartigen Seitenträgern 23 zusammengesetzt ist. An der in Fig. 1 rechten Seite des Rahmens 19 der Arbeitseinheit 13 ist eine Versorgungs- und Steuereinheit 24 in Form eines Schaltschranks angebracht. Sowohl der Produktförderer 11 als auch die Arbeitseinheit 13 sind mittels Standfüßen 25 auf dem Boden 27 abgestellt.

Die in Fig. 1 und 2 dargestellte Vorrichtung ist in eine Produktionslinie für abgepackte Lebensmittel integriert und dient dazu, von einem nicht dargestellten Hochleistungs-Slicer aufgeschnittene Produktportionen formatsatzweise zu verpacken. Der Produktförderer 11 ist demgemäß dazu vorgesehen, angelieferte Produktportionen in einer rechtwinklig zur Zeichnungsebene verlaufenden Förderrichtung zu fördern und diese in eine Anordnung von durch die Arbeitseinheit 13 bereitgestellten Verpackungen einzulegen. Die Arbeitseinheit 13 stellt an einem Übergabeabschnitt 28 aus einer bereitgestellten Kunststofffolienbahn mittels eines Tiefziehprozesses eine Anordnung von Verpackungsmulden zur Verfügung. Nach dem Einlegen der Produktportionen werden die Verpackungsmulden mit einer ebenfalls bereitgestellten Kunststofffolienbahn verschlossen. Oberhalb des Übergabeabschnitts 28 befindet sich eine Schutzabdeckung 29.

Um bei Umbau-, Reparatur- oder Wartungsarbeiten einen leichten und sicheren Zugang zu der Arbeitseinheit 13 zu gewährleisten, ist ein Gehäuse 30 der Fördereinheit 17 um eine Schwenkachse S verschwenkbar an dem Rahmen 15 gelagert. Sie kann somit ausgehend von der in Fig. 1 dargestellten abgesenkten Betriebsstellung in die in Fig. 2 dargestellte angehobene Wartungsstellung geschwenkt werden.

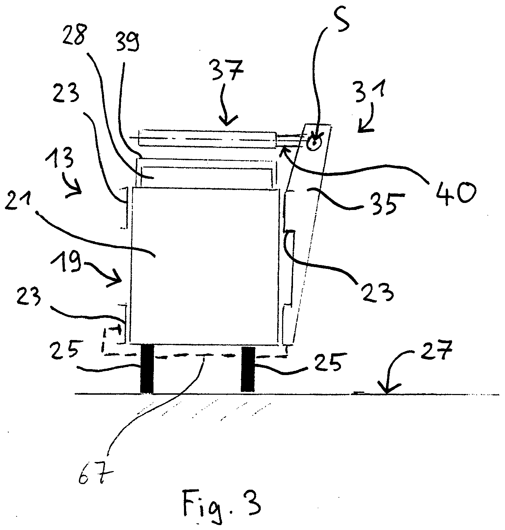

Bei der in Fig. 3 bis 5 dargestellten erfindungsgemäßen Vorrichtung zur Verarbeitung von Lebensmittelprodukten sind der Produktförderer 31 sowie die Arbeitseinheit 13 nicht als separat aufzustellende Maschinen konzipiert, sondern zu einer Einheit verschmolzen. Speziell ist der Rahmen 35 des Produktförderers 31 wie dargestellt in Beabstandung von der Standfläche 27 an der Arbeitseinheit 13 befestigt. Das heißt der Produktförderer 31 ist vollständig durch die Arbeitseinheit 13 getragen und sowohl in horizontaler als auch in vertikaler Richtung an dieser abgestützt. Die Masse und die Steifigkeit der Arbeitseinheit 13 ist ausreichend, um der gesamten Einheit Standfestigkeit zu verleihen. Die Fördereinheit 37 des Produktförderers 31 ist bei der in Fig. 3 bis 5 dargestellten Ausführungsform der Erfindung ebenfalls zwischen einer abgesenkten Betriebsstellung und einer angehobenen Wartungsstellung verschwenkbar. Die Fördereinheit 37 ist hier jedoch als Bandkassette ausgebildet, in welcher die Wellen des entsprechenden Band- oder Riemenförderers gelagert sind. Somit kann auf ein verschwenkbares Gehäuse der Fördereinheit 37 verzichtet werden.

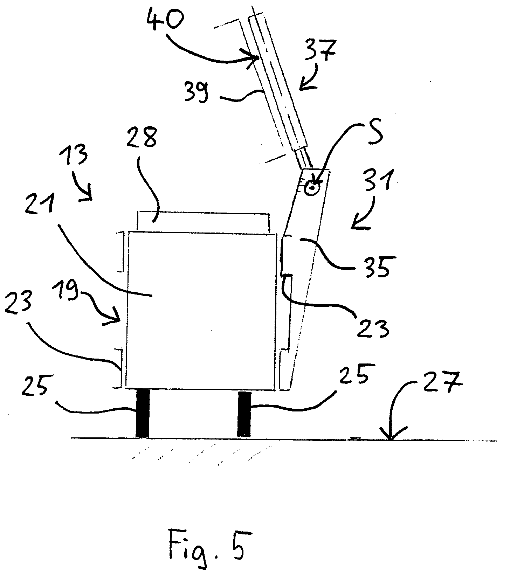

Wie bei der in Fig. 1 und 2 dargestellten Ausführungsform ist eine Schutzabdeckung 39 oberhalb des Übergabeabschnitts 28 der Arbeitseinheit 13 angeordnet. Bei Bedarf kann die Schutzabdeckung 39 jedoch an der Unterseite 40 der Fördereinheit 37 befestigt oder befestigbar sein, sodass sie gemeinsam mit dieser zwischen der Betriebsstellung und der Wartungsstellung verschwenkbar ist (Fig. 5). Im Wartungsfall kann somit ein Arbeitsgang eingespart werden. Die Schutzabdeckung 39 dient bei der in Fig. 3 bis 5 dargestellten erfindungsgemäßen Vorrichtung zusätzlich als Auffangvorrichtung zum Auffangen solcher Partikel, die von der Fördereinheit 37 herabfallen. Damit wird die Arbeitseinheit 13 auch vor Reinigungsfluid geschützt, wenn aus Hygienegründen der Produktförderer 31 in regelmäßigen Intervallen intensiv gereinigt werden muss.

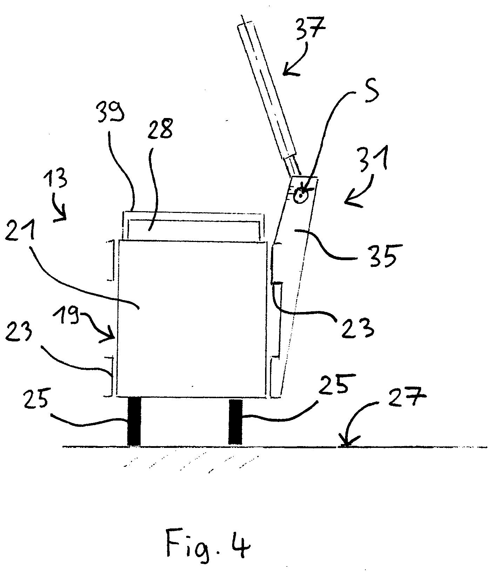

Eine Variante dieses Ausführungsbeispiels ist in Fig. 3 durch eine gestrichelte Linie angedeutet. In Fig. 4 und 5 ist diese Variante der Einfachheit halber nicht gezeigt. Gemäß dieser Variante besitzt der Rahmen 35 einen als horizontal auskragender Rahmenbereich ausgebildeten Arm 67. Der Arm 67 geht von dem sich vertikal erstreckenden Rahmenbereich an der einen Seite der Arbeitseinheit 13 aus, erstreckt sich an der Unterseite der Arbeitseinheit 13 entlang zur gegenüberliegenden Seite und ist dort fixiert. Auf diese Weise wird die Arbeitseinheit 13 vom Rahmen 35 insbesondere klammerartig umgriffen. Bei dieser Abstützung bzw. Halterung des Produktförderers 31 an der Arbeitseinheit 13 kann in vorteilhafter Weise eine besonders gleichmäßig verteilte Krafteinleitung über den Rahmen 35 des Produktförderers 31 in die Arbeitseinheit 13 erreicht werden. Zusätzliche Standfüße sind auch in dieser Variante nicht erforderlich.

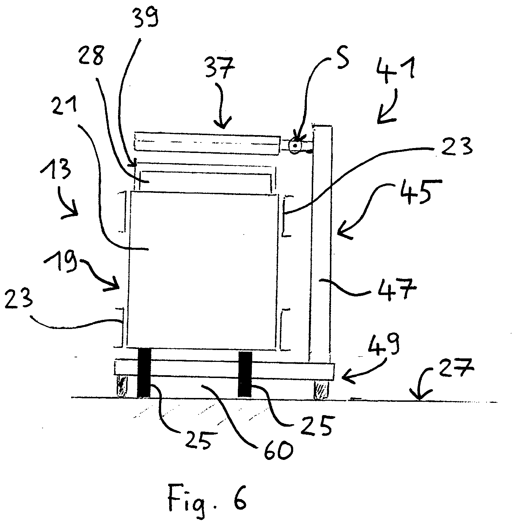

Die Fig. 6 bis 8 zeigen eine nicht erfindungsgemäße Vorrichtung zur Verarbeitung von Lebensmittelprodukten. Die Vorrichtung umfasst ebenfalls einen Produktförderer 41 sowie eine Arbeitseinheit 13, unterscheidet sich jedoch insofern von der vorstehend beschriebenen Ausführungsform, als der Rahmen 45 des Produktförderers 41 als tragendes Gestell ausgebildet ist. Speziell umfasst der Rahmen 45 des Produktförderers 41 einen vertikalen Tragabschnitt 47 sowie einen horizontalen Standabschnitt 49. Der Rahmen 45 weist also wie in den Figuren erkennbar einen im Wesentlichen L-förmigen Querschnitt auf. Die Breite des Standabschnitts 49 ist größer als die Breite der seitlich auskragenden Fördereinheit 37, sodass für den Produktförderer 41 eine ausreichende Standfestigkeit sichergestellt ist. Der Standabschnitt 49 weist jedoch nur eine geringe Bauhöhe auf, sodass er in den zwischen den Standfüßen 25 der Arbeitseinheit 13 gebildeten Freiraum 60 hineinreichend angeordnet werden kann. Obwohl also der Produktförderer 41 für sich genommen standfest ist, kann die Breite der Gesamtvorrichtung gegenüber der in Fig. 1 und 2 dargestellten Anordnung verringert werden. Bei Bedarf kann der Standabschnitt 49 zur zusätzlichen Stabilisierung erfindungsgemäß an der Arbeitseinheit 13 befestigt sein.

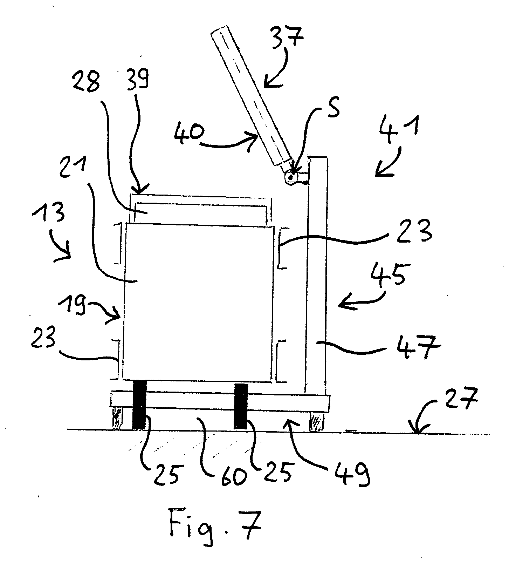

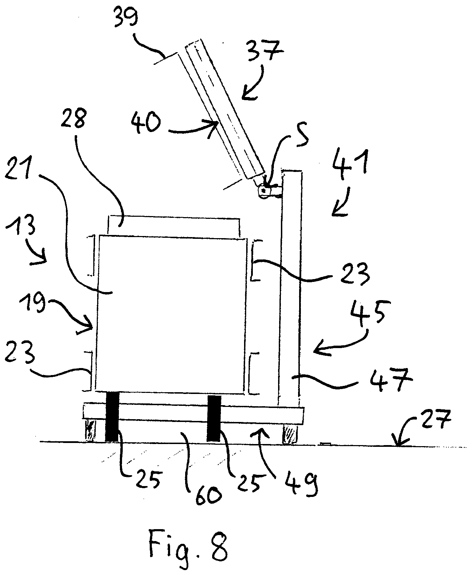

Wie bei der in Fig. 3 bis 5 dargestellten Ausführungsform ist auch bei der in Fig. 6 bis 8 dargestellten Ausführungsform die Fördereinheit 37 als Bandkassette ausgeführt und zwischen einer abgesenkten Betriebsstellung (Fig. 6) sowie einer angehobenen Wartungsstellung (Fig. 7 und 8) verschwenkbar. Gemäß Fig. 8 kann die Schutzabdeckung 39 wiederum an der Unterseite 40 der Fördereinheit 37 befestigt oder befestigbar sein.

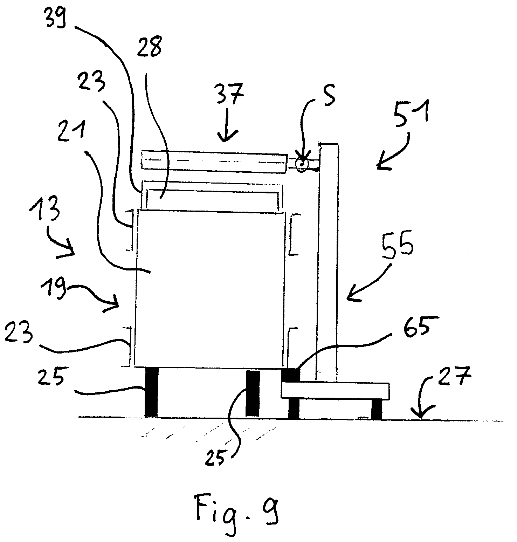

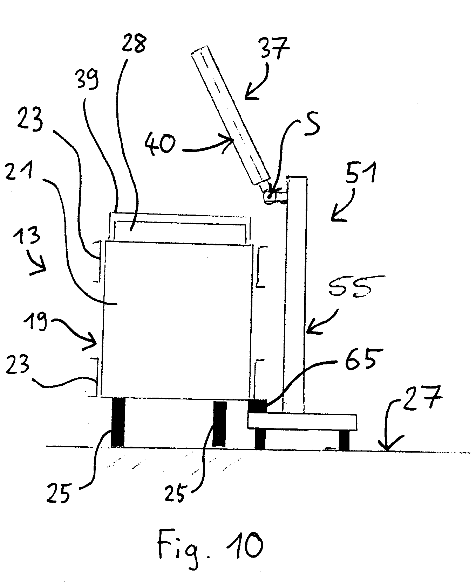

Bei der in Fig. 9 und 10 dargestellten weiteren Ausführungsform einer erfindungsgemäßen Vorrichtung zur Verarbeitung von Lebensmittelprodukten ist der Rahmen 55 des Produktförderers 51 sowohl am Boden 27 als auch an der Arbeitseinheit 13 abgestützt. Speziell ist der Rahmen 55 mittels eines Verbindungselements 65 an einem der Seitenträger 23 befestigt, beispielsweise an diesem angeschraubt. Aufgrund dieser Befestigung muss der Rahmen 55 nicht zwingend für sich genommen standfest sein, sodass er dementsprechend leichter und kleiner ausgelegt werden kann. Auch bei der in Fig. 9 und 10 dargestellten Ausführungsform ist die Fördereinheit 37 als Bandkassette ausgeführt und zwischen einer abgesenkten Betriebsstellung (Fig. 9) und einer angehobenen Wartungsstellung (Fig. 10) verschwenkbar. Die Schutzabdeckung 39 kann wiederum bei Bedarf an der Unterseite 40 der Fördereinheit 37 befestigt sein, was in Fig. 9 und 10 jedoch nicht dargestellt ist.

Durch das Einbeziehen der unter der Fördereinheit 37 anzuordnenden Arbeitseinheit 13 in die Stützkonstruktion des Rahmens 35, 45, 55 des Produktförderers 31, 41, 51 - sei es in Form einer direkten mechanischen Stützverbindung und/oder durch gezielte Nutzung eines durch die Arbeitseinheit 13 definierten Freiraums-kann eine wesentlich leichtere und kompaktere Bauweise für die Verarbeitungsvorrichtung als Ganzes erzielt werden.

### Bezugszeichenliste

- 11: Produktförderer
- 13: Arbeitseinheit
- 15: Rahmen des Produktförderers
- 17: Fördereinheit
- 19: Rahmen der Arbeitseinheit
- 21: Querträger
- 23: Seitenträger
- 24: Versorgungs- und Steuereinheit
- 25: Standfuß
- 27: Standfläche, Boden
- 28: Übergabeabschnitt
- 29: Schutzabdeckung
- 30: Gehäuse
- 31: Produktförderer
- 35: Rahmen des Produktförderers
- 37: Fördereinheit
- 39: Schutzabdeckung
- 40: Unterseite der Fördereinheit
- 41: Produktförderer
- 45: Rahmen des Produktförderers
- 47: Tragabschnitt
- 49: Standabschnitt
- 51: Produktförderer
- 55: Rahmen des Produktförderers
- 60: Freiraum
- 65: Verbindungselement
- 67: Rahmenbereich, Arm
- S: Schwenkachse

## Patentansprüche

1. Vorrichtung zur Verarbeitung von Lebensmittelprodukten, die umfasst:
einen Produktförderer (31, 51) mit einem Rahmen (35, 55) und einer Fördereinheit (37) zum Fördern von Produkten entlang einer Förderrichtung, wobei die Fördereinheit (37) bezüglich der Förderrichtung seitlich auskragend an dem Rahmen (35, 55) angeordnet ist, und
eine die Verarbeitung der geförderten Produkte betreffende Arbeitseinheit (13), die zumindest teilweise unter der auskragenden Fördereinheit (37) des Produktförderers (31, 51) angeordnet ist,
**dadurch gekennzeichnet, dass**
der Rahmen (35, 55) des Produktförderers (31, 51) über eine mechanische Verbindung an der Arbeitseinheit (13) abgestützt oder gehalten, und insbesondere fixiert, ist,
die Arbeitseinheit (13) eine Einrichtung oder Teile einer Einrichtung zum automatischen Verpacken der geförderten Produkte umfasst, und
der Produktförderer (31, 51) zum Einlegen der geförderten Produkte in jeweilige, durch die Einrichtung zum automatischen Verpacken bereitgestellte Verpackungseinheiten ausgebildet ist.

2. Vorrichtung nach Anspruch 1,
**dadurch gekennzeichnet, dass**
der Rahmen (35, 55) des Produktförderers (31, 51) in horizontaler und/oder in vertikaler Richtung an der Arbeitseinheit (13) abgestützt ist, wobei insbesondere der Rahmen (35, 55) mit einem horizontalen Rahmenbereich und/oder mit einem vertikalen Rahmenbereich an der Arbeitseinheit (13) fixiert ist.

3. Vorrichtung nach Anspruch 1 oder 2,
**dadurch gekennzeichnet, dass**
der Produktförderer (31) vollständig durch die Arbeitseinheit (13) getragen ist, wobei insbesondere der Rahmen (35) des Produktförderers (31) in Beabstandung von einer Standfläche (27) an der Arbeitseinheit (13) befestigt ist.

4. Vorrichtung nach Anspruch 1 oder 2,
**dadurch gekennzeichnet, dass**
der Rahmen (55) des Produktförderers (51) sowohl an einer Standfläche (27) als auch an der Arbeitseinheit (13) abgestützt ist, wobei insbesonderedass der Rahmen (55) des Produktförderers (51) nur zusammen mit der Arbeitseinheit (13) eine ausreichende Steifigkeit und Standfestigkeit zum Tragen und Betreiben der Fördereinheit (37) bereitstellt.

5. Vorrichtung nach einem der vorstehenden Ansprüche,
**dadurch gekennzeichnet, dass**
der Rahmen (35, 55) des Produktförderers (31, 51) an einem, insbesondere seitlichen, Halterahmen (23) der Arbeitseinheit (13) fixiert ist, und/oder dass die Fördereinheit (37) des Produktförderers (31, 41, 51) in Bezug auf dessen Rahmen (35, 45, 55) zwischen einer abgesenkten Betriebsstellung und einer angehobenen Wartungsstellung bewegbar ist.

6. Vorrichtung nach einem der vorstehenden Ansprüche,
**dadurch gekennzeichnet, dass**
die Fördereinheit (37) des Produktförderers (31, 41, 51) von der Arbeitseinheit (13), insbesondere durch Verschwenken oder Wegklappen, weg bewegbar ist.

7. Vorrichtung nach einem der vorstehenden Ansprüche,
**dadurch gekennzeichnet, dass**
zwischen der Fördereinheit (37) des Produktförderers (31, 41, 51) und dem Rahmen (35, 45, 55) eine Gelenkverbindung vorgesehen ist, die bei stationärem Rahmen (35, 45, 55) ein Verschwenken oder Wegklappen der Fördereinheit (37) relativ zum Rahmen (35, 45, 55) erlaubt, insbesondere um eine parallel zur Förderrichtung verlaufenden Schwenkachse (S).

8. Vorrichtung nach einem der Ansprüche 5 bis 7,
**dadurch gekennzeichnet, dass**
eine Funktionseinheit (39) der Arbeitseinheit (13) gemeinsam mit der Fördereinheit (13) bewegbar ist, wobei, bevorzugt, die Funktionseinheit (39) an einer Unterseite (40), im unteren Bereich und/oder unterhalb der Fördereinheit (37) fixiert ist, und/oder dass die Funktionseinheit (39) in einer Betriebsstellung eine Betriebsfunktion der Arbeitseinheit (13) und gleichzeitig eine Betriebsfunktion der Fördereinheit (37) bereitstellt.

9. Vorrichtung nach einem der vorstehenden Ansprüche,
**dadurch gekennzeichnet, dass**
die Arbeitseinheit (13) als Tiefzieheinrichtung oder als ein Bestandteil einer Tiefzieheinrichtung ausgebildet ist.

10. Vorrichtung nach einem der vorstehenden Ansprüche,
**dadurch gekennzeichnet, dass**
der Produktförderer (31, 41, 51) zum Gruppieren von Produkten oder mehrere Einzelprodukte umfassenden Portionen, zum Bilden von Zeilen aus Produkten oder mehrere Einzelprodukte umfassenden Portionen und/oder zum Bilden von Formatsätzen aus Produkten oder mehrere Einzelprodukte umfassenden Portionen, ausgebildet ist.

11. Vorrichtung nach einem der vorstehenden Ansprüche,
**dadurch gekennzeichnet, dass**
Positionierungsmittel vorgesehen sind, mittels welcher die Position des Rahmens (35, 45, 55), insbesondere von horizontalen und/oder vertikalen Rahmenbereichen, relativ zu der Arbeitseinheit (13), insbesondere bei an der Arbeitseinheit (13) abgestütztem oder gehaltenem Rahmen (35, 45, 55), einstellbar und in einem jeweils eingestellten Zustand gehalten ist, wobei insbesondere die Positionierungsmittel in ihrer einen Abstand zwischen dem Rahmen (35, 45, 55) und der Arbeitseinheit (13) festlegenden Länge veränderlich sind.

12. Vorrichtung nach einem der vorstehenden Ansprüche,
**dadurch gekennzeichnet, dass**
der Rahmen (35) die Arbeitseinheit (13) untergreift oder unterseitig umgreift, wobei insbesondere ein horizontal auskragender Rahmenbereich (67) des Rahmens (35) sich ausgehend von einer Seite der Arbeitseinheit (13) unter dieser hindurch zur gegenüberliegenden Seite erstreckt und an dieser gegenüberliegenden Seite der Arbeitseinheit (13) fixiert ist.

## Claims

1. An apparatus for processing food products, comprising:
a product conveyor (31, 51) having a frame (35, 55) and a conveyor unit (37) for conveying products along a conveying direction, wherein the conveyor unit (37) is arranged at the frame (35, 55) projecting laterally with respect to the conveying direction; and
a work unit (13) which is associated with the processing of the conveyed products and which is arranged at least partly beneath the projecting conveyor unit (37) of the product conveyor (31, 51),
**characterized in that**
the frame (35, 55) of the product conveyor (31, 51) is supported or held at the work unit (13), and is in particular fixed to it, via a mechanical connection; **in that** the work unit (13) comprises a device or parts of a device for an automatic packaging of the conveyed products; and
**in that** the product conveyor (31, 51) is configured for feeding the conveyed products into respective packaging units provided by the device for the automatic packaging.

2. An apparatus in accordance with claim 1,
**characterized in that**
the frame (35, 55) of the product conveyor (31, 51) is supported at the work unit (13) in a horizontal direction and/or in a vertical direction, with in particular the frame (35, 55) being fixed to the work unit (13) with a horizontal frame region and/or with a vertical frame region.

3. An apparatus in accordance with claim 1 or claim 2,
**characterized in that**
the product conveyor (31) is completely carried by the work unit (13), with in particular the frame (35) of the product conveyor (31) being fastened to the work unit (13) at a spacing from a base (27).

4. An apparatus in accordance with claim 1 or claim 2,
**characterized in that**
the frame (55) of the product conveyor (51) is supported both at a base (27) and at the work unit (13), with in particular the frame (55) of the product conveyor (51) only providing a sufficient stiffness and stability for carrying and operating the conveyor unit (37) together with the work unit (13).

5. An apparatus in accordance with any one of the preceding claims,
**characterized in that**
the frame (35, 55) of the product conveyor (31, 51) is fixed to a holding frame (23), in particular to a side holding frame (23), of the work unit (13); and/or **in that** the conveyor unit (37) of the product conveyor (31, 41, 51) is movable with respect to its frame (35, 45, 55) between a lowered operating position and a raised maintenance position.

6. An apparatus in accordance with any one of the preceding claims,
**characterized in that**
the conveyor unit (37) of the product conveyor (31, 41, 51) is movable away from the work unit (13), in particular by pivoting or folding away.

7. An apparatus in accordance with any one of the preceding claims,
**characterized in that**
a joint connection is provided between the conveyor unit (37) of the product conveyor (31, 41, 51) and the frame (35, 45, 55) and allows a pivoting or folding away of the conveyor unit (37) relative to the frame (35, 45, 55) with a stationary frame (35, 45, 55), in particular about a pivot axis (S) extending in parallel with the conveying direction.

8. An apparatus in accordance with any one of the claims 5 to 7,
**characterized in that**
a functional unit (39) of the work unit (13) is movable together with the conveyor unit (13), with, preferably, the functional unit (39) being fixed to a lower side (40), in the lower region and/or beneath the conveyor unit (37); and/or **in that** the functional unit (39) provides, in an operating position, an operating function of the work unit (13) and simultaneously provides an operating function of the conveyor unit (37).

9. An apparatus in accordance with any one of the preceding claims,
**characterized in that**
the work unit (13) is configured as a deep-drawing device or as a component of a deep-drawing device.

10. An apparatus in accordance with any one of the preceding claims,
**characterized in that**
the product conveyor (31, 41, 51) is configured for grouping products or portions comprising a plurality of individual products, for forming rows of products or portions comprising a plurality of individual products and/or for forming format sets of products or portions comprising a plurality of individual products.

11. An apparatus in accordance with any one of the preceding claims,
**characterized in that**
positioning means are provided by means of which the position of the frame (35, 45, 55), in particular of horizontal and/or vertical frame regions, relative to the work unit (13), in particular with the frame (35, 45, 55) supported or held at the work unit (13), being adjustable and being held in a respective set state, with in particular the positioning means being variable with respect to their length fixing a spacing between the frame (35, 45, 55) and the work unit (13).

12. An apparatus in accordance with any one of the preceding claims,
**characterized in that**
the frame (35) engages beneath or engages around the work unit (13) at the bottom side, with in particular a horizontally projecting frame region (67) of the frame (35) extending starting from a side of the work unit (13), beneath and through it to the oppositely disposed side and being fixed to this oppositely disposed side of the work unit (13).

## Revendications

1. Dispositif de traitement de produits alimentaires qui comprend :
un convoyeur de produits (31, 51) avec un cadre (35, 55) et une unité de convoyage (37) pour convoyer des produits le long d'une direction de convoyage, l'unité de convoyage (37) étant agencée sur le cadre (35, 55) latéralement en porte-à-faux par rapport à la direction de convoyage, et
une unité de travail (13) concernant le traitement des produits convoyés, qui est agencée au moins en partie au-dessous de l'unité de convoyage (37) en porte-à-faux, du convoyeur de produits (31, 51),
**caractérisé en ce que**
le cadre (35, 55) du convoyeur de produits (31, 51) est soutenu ou maintenu par l'intermédiaire d'une liaison mécanique sur l'unité de travail (13), et en particulier fixé,
l'unité de travail (13) comprend un dispositif ou des parties d'un dispositif pour l'emballage automatique des produits convoyés, et
le convoyeur de produits (31, 51) est réalisé pour insérer les produits convoyés dans des unités d'emballage respectives mises à disposition par le dispositif pour l'emballage automatique.

2. Dispositif selon la revendication 1, **caractérisé en ce que** le cadre (35, 55) du convoyeur de produits (31, 51) est soutenu en direction horizontale et/ou verticale sur l'unité de travail (13), en particulier le cadre (35, 55) étant fixé sur l'unité de travail (13) avec une zone de cadre horizontale et/ou avec une zone de cadre verticale.

3. Dispositif selon la revendication 1 ou 2, **caractérisé en ce que** le convoyeur de produits (31) est porté totalement par l'unité de travail (13), en particulier le cadre (35) du convoyeur de produits (31) étant fixé sur l'unité de travail (13) à distance d'une surface de pose (27).

4. Dispositif selon la revendication 1 ou 2, **caractérisé en ce que** le cadre (55) du convoyeur de produits (51) est soutenu tant sur une surface de pose (27) que sur l'unité de travail (13), et en particulier, le cadre (55) du convoyeur de produits (51) ne met à disposition que conjointement avec l'unité de travail (13) une rigidité et une stabilité suffisante pour porter et faire fonctionner l'unité de convoyage (37).

5. Dispositif selon l'une des revendications précédentes, **caractérisé en ce que** le cadre (35, 55) du convoyeur de produits (31, 51) est fixé sur un cadre support (23), en particulier latéral, de l'unité de travail (13), et/ou **en ce que** l'unité de convoyage (37) du convoyeur de produits (31, 41, 51) peut être déplacée par rapport au cadre (35, 45, 55) de celui-ci entre une position de fonctionnement abaissée et une position de maintenance soulevée.

6. Dispositif selon l'une des revendications précédentes, **caractérisé en ce que** l'unité de convoyage (37) du convoyeur de produits (31, 41, 51) peut être éloignée de l'unité de travail (13), en particulier par pivotement ou rabattement.

7. Dispositif selon l'une des revendications précédentes, **caractérisé en ce qu'**il est prévu entre l'unité de convoyage (37) du convoyeur de produits (31, 41, 51) et le cadre (35, 45, 55) une liaison articulée qui, dans le cas de cadre stationnaire (35, 45, 55), permet un pivotement ou un rabattement de l'unité de convoyage (37) par rapport au cadre (35, 45, 55), en particulier autour d'un axe de pivotement (S) s'étendant parallèlement à la direction de convoyage.

8. Dispositif selon l'une des revendications 5 à 7, **caractérisé en ce qu'**une unité fonctionnelle (39) de l'unité de travail (13) peut être déplacée conjointement avec l'unité de convoyage (13), l'unité fonctionnelle (39) étant fixée sur une face inférieure (40), dans la zone inférieure et/ou au-dessous de l'unité de convoyage (37), et/ou **en ce que** l'unité fonctionnelle (39) met à disposition, dans une position de fonctionnement, un mode de fonctionnement de l'unité de travail (13) et, en même temps, un mode de fonctionnement de l'unité de convoyage (37).

9. Dispositif selon l'une des revendications précédentes, **caractérisé en ce que** l'unité de travail (13) est réalisée sous forme de dispositif d'emboutissage ou sous forme de composant d'un dispositif d'emboutissage.

10. Dispositif selon l'une des revendications précédentes, **caractérisé en ce que** le convoyeur de produits (31, 41, 51) est réalisé pour regrouper des produits ou des portions comprenant plusieurs produits individuels, pour former des lignes de produits ou de portions comprenant plusieurs produits individuels et/ou pour former des jeux formatés de produits ou de portions comprenant plusieurs produits individuels.

11. Dispositif selon l'une des revendications précédentes, **caractérisé en ce qu'**il est prévu des moyens de positionnement au moyen desquels on peut régler et maintenir dans un état de réglage respectif la position du cadre (35, 45, 55), en particulier de zones horizontales et/ou verticales du cadre, par rapport à l'unité de travail (13), en particulier dans le cas de cadre (35, 45, 55) soutenu ou maintenu sur l'unité de travail (13), les moyens de positionnement étant en particulier variables dans leur longueur fixant une distance entre le cadre (35, 45, 55) et l'unité de travail (13).

12. Dispositif selon l'une des revendications précédentes, **caractérisé en ce que** le cadre (35) saisit par-dessous ou entoure par-dessous l'unité de travail (13), une zone de cadre (67) du cadre (35), qui est en porte-à-faux à l'horizontale, s'étendant en particulier depuis un côté de l'unité de travail (13) au-dessous de celle-ci jusqu'au côté opposé et étant fixée sur ce côté opposé de l'unité de travail (13).
